# EUROPÄISCHE PATENTSCHRIFT

(11) **EP 4 064 845 B1**
(45) Veröffentlichungstag und Bekanntmachung des Hinweises auf die Patenterteilung: **07.05.2025**
(21) Anmeldenummer: 20816929.2
(22) Anmeldetag: 27.11.2020
(51) Int. Cl.: A22C 11/00, A22C 17/08, B07B 1/22, B07B 1/52, B30B 9/20, B65B 69/00

(54) **GERÄT ZUM RÜCKGEWINNEN VON FÜLLGUT AUS SCHLAUCHBEUTELVERPACKUNGEN**
APPARATUS FOR RECOVERING FILLING MATERIAL FROM TUBULAR-BAG PACKAGES
APPAREIL DE RÉCUPÉRATION DE MATÉRIAU DE REMPLISSAGE À PARTIR D'EMBALLAGES DE SACS TUBULAIRES

(30) Priorität: 27.11.2019 DE 202019004830 U
(43) Veröffentlichungstag der Anmeldung: 05.10.2022
(73) Patentinhaber: Process Engineering Dr. Schwalbe UG, 61118 Bad Vilbel (DE)
(72) Erfinder: SCHWALBE, Thomas, 92339 Beilngries (DE); BRETTSCHNEIDER, Hartmut, 92339 Beilngries (DE)
(74) Vertreter: Misselhorn, Hein-Martin
(86) Internationale Anmeldenummer: PCT/EP2020/083717
(87) Internationale Veröffentlichungsnummer: WO 2021/105417

(56) Entgegenhaltungen:
- EP-A1- 3 437 491
- CH-A- 553 097
- DE-A1- 2 412 797

## Beschreibung

Die Erfindung betrifft ein Gerät zum Rückgewinnen von Füllgut aus Schlauchbeutel-Verpackungen insbesondere in Gestalt von natürlichen oder künstlichen Wurstdärmen gemäß dem Oberbegriff des Anspruchs 1.

### TECHNISCHER HINTERGRUND

Bei der automatisierten Befüllung von Schlauchbeutel-Verpackungen, wie beispielsweise bei der Herstellung von Würsten aus in einen Natur- oder Kunstdarm gepresstem Brät, kommt es gelegentlich vor, dass die einzelnen Schlauchbeutel-Verpackungen nicht richtig verschlossen werden.

Da es für eine ressourcenschonende Fertigung erforderlich ist, den Inhalt der fehlerhaften Verpackungen zurückzugewinnen, werden Geräte zur automatisierten Entleerung der fehlerhaften Verpackungen eingesetzt. Die Nutzung derartiger Geräte führt jedoch häufig zu einer ungewollten Vermengung von Verpackungsbestandteilen zu dem rückgewonnen VerpackungsInhalt.

### STAND DER TECHNIK

Üblicher Weise werden die fehlerhaft verpackten, gefüllten Schlauchbeutel-Verpackungen einem Spalt zwischen einer rotierenden Walze und einer parallel zu der Walze angeordneten rotierenden Lochtrommel zugeführt. Durch den auf die Schlauchbeutel-Verpackung ausgeübten Quetsch-Druck kommt es dabei zum Aufbrechen der Verpackungen.

Im Regelfall ist es im Wesentlichen so, dass die Schlauchbeutelverpackung aufplatzt und sich das in ihr enthaltene Produkt durch den so entstehenden Schlitz oder Riss zur Seite hin in einen Bereich neben dem aktuell gequetschten Schlauchbeutel herausquillt, von wo es durch die Löcher der Lochtrommel in deren Inneres gelangt. Dort sammelt es sich an und kann dann von dort aus zur Wiederverwendung abtransportiert werden.

Der danach zumindest weitgehend leere Schlauchbeutel bleibt zunächst an der Lochtrommel oder an der Walze hängen und wird dadurch aus dem Spalt herausbefördert. Ungünstigerweise löst sich aber bestenfalls ein Teil der leeren Schlauchbeutel im Anschluß daran von allein von der Lochtrommel oder der Walze ab, nachdem sie auf diese Art und Weise den Spalt verlassen haben.

Es tritt also häufig das Problem auf, dass die leeren Schlauchbeutel-Verpackungen an der Walze und vor allem an der Lochtrommel haften bleiben. Sie gelangen dann nach einer 360°-Drehung der Lochtrommel erneut in den besagten Spalt, zusammen mit den jetzt aufzubrechenden weiteren Schlauchbeutelverpackungen. Die in ungünstigen Fällen wieder in den Spalt gelangenden leeren Schlaubeutel verlegen einen beträchtlichen Teil der Löcher der Lochtrommel. Ergießt sich nun aus dem nachfolgend bearbeiteten Schlauchbeutel herausgequetschtes Produkt auf einen solchen, die Löcher der Lochtrommel verlegenden, erneut in den Spalt eingezogenen Schlauchbeutel, dann wird das Produkt örtlich mit großem Druck durch die Löcher der Lochtrommel gepresst. Im Zuge dessen neigt das Produkt in ungünstigen Fällen dazu jenen Teil des ihm zunächst den Weg versperrenden, wieder in den Spalt eingezogenen Schlauchbeutels auszustanzen und jenen kleinen Fetzen in das Innere der Lochtrommel zu sprengen, der zunächst ein Loch der Lochtrommel überspannt und dadurch abgedichtet hat.

Wird nun der auf diese Art und Weise rückgewonnene Inhalt fehlerhafter Schlauchbeutel-Verpackungen ohne eine erneute Kontrolle wieder zur Befüllung von neuen Schlauchbeutel-Verpackungen verwendet, kommt es aufgrund der darin enthaltenen Verpackungsbestandteile zu einem Qualitätsmangel der Endprodukte. Demgegenüber würde eine Kontrolle der rückgewonnenen Verpackungsinhalte auf Verpackungsbestandteile zu einem erheblichen zusätzlichen Aufwand führen.

Dieser Effekt ist insbesondere bei pastösem Verpackungsinhalt, wie beispielsweise dem sogenannten Brät aus der Wurstherstellung zu beobachten. Pastöse Inhalte erhöhen die Neigung des Schlauchbeutels, an der Lochtrommel oder der Walze zu haften. Hinzu kommt, dass gerade hochelastische, weil z. B. aus Naturdarm bestehende Schlauchbeutel in besonderem Maße die Tendenz zeigen, an der Lochtrommel kleben zu bleiben und sich von dort nur schlecht entfernen zu lassen.

Um die Verpackungen von der Lochtrommel zu entfernen, kommen daher Abstreifer zum Einsatz. Solche Abstreifer werden bisher klingenartig ausgeführt. Sie werden tangential oder in einem flachen Anstellwinkel gegenüber der Tangente an die abzustreifende Mantelfläche der Lochtrommel angelegt und schälen die an der Lochtrommel anhaftenden, leeren Schlauchbeutelverpackungen von dieser ab. Das gelingt nicht immer. Zudem tritt dabei häufig das Problem auf, dass der klingenartige Abstreifer die weitgehend entleerte Schlauchbeutelverpackung, die er vom Mantel der Lochtrommel entfernen soll, ungewollt fragmentiert und so entstehende Schlauchbeutelverpackungsfragmente zu der zurückzugewinnenden Füllmasse bzw. dem zurückzugewinnenden Brät gelangen.

Hierbei kommt es nicht nur aber in besonderem Maß zu Problemen, wenn es sich bei den abzuschälenden Schlauchbeutelverpackungen um hochelastische Naturdärme handelt. Gerade Naturdärme tendieren nicht selten dazu, sich unter dem Einfluss der bekannten Abstreifer noch fester in die Löcher der Lochtrommel einzuschmiegen und so die Abstreifer zu unterlaufen und schließlich zu passieren, ohne dass sie sich so weit von der abzustreifenden Mantelfläche der Lochtrommel lösen, dass sie schließlich von dieser abfallen.

Aus der CH 553 097 ist ein Verfahren bekannt zum Rückgewinnen von Füllgut aus Verpackungen, wobei das verpackte Produkt in einen Spalt zwischen einem Lochband und einem Pressband eingeführt wird, das Produkt durch die Löcher des Lochbandes gequetscht wird und die Hülle direkt durch einen klingenartigen Abstreifer vom Pressband entfernt wird.

### DAS DER ERFINDUNG ZU GRUNDE LIEGENDE PROBLEM

Angesichts dessen ist es die Aufgabe der Erfindung ein Mittel anzugeben, dass das problemlose und sichere Entfernen von Schlauchbeutel-Verpackungen von der Lochtrommel ermöglicht, möglichst ohne die Schlauchbeutel-Verpackungen weiter zu fragmentieren.

### EINE ERFINDUNGSGEMÄSSE LÖSUNG

Die erfindungsgemäße Lösung erfolgt mit einem Gerät nach Maßgabe des Hauptanspruchs.

Es handelt sich um ein Gerät zum Rückgewinnen von Füllgut aus Schlauchbeutel-Verpackungen, mit einer rotierenden Lochtrommel und einer rotierenden Walze. Diese stehen so miteinander in Wirkverbindung, dass gefüllte Schlauchbeutel-Verpackungen, die in den Spalt zwischen der Walze und der Lochtrommel geführt werden, aufgebrochen werden und der Inhalt der Schlauchbeutel-Verpackungen von der Walze durch die Löcher der Lochtrommel gedrückt wird. Dabei ist dem Außenumfang der Lochtrommel an einer Position, die in Arbeitsdrehrichtung gesehen hinter dem besagten Spalt liegt, ein Abstreifer mit einem Abstreiforgan zur Entfernung der ausgepressten Schlauchbeutel von der Trommel zugeordnet.

Erfindungsgemäß ist vorgesehen, dass das Abstreiforgan in Richtung entlang einer Zustell-Linie gegen den Mantel der Lochtrommel zugestellt wird, die die Drehachse der Lochtrommel nicht schneidet. Die Zustellung des Abstreiforgans oder des Kontaktabschnitts des Abstreiforgans erfolgt also nicht in rein radialer Richtung sondern asymmetrisch bzw. schräg zu der Tangente oder Tangentenschar an die Kontaktzone, d. h. der Zone, in der das Abstreiforgan oder der Kontaktabschnitt des Abstreifers gegen den Mantel der Lochtrommel zur Anlage kommt.

Der Begriff "Schlauchbeutel-Verpackung" bezeichnet dabei einen biegeweichen Schlauch, idealerweise in Gestalt eines Darms insbesondere eines Naturdarms wie er für zum Verzehr bestimmte Würste verwendet wird.

Die Beachtung dieser erfindungsgemäßen Bedingung hat sich bei praktischen Versuchen als überraschend wirksam herausgestellt.

Sie ist wesentlich wirksamer als die genau oder im Wesentlichen rein radiale Zustellung des Abstreiforgans oder des Kontaktabschnitts des Abstreiforgans.

Warum das so ist, das ist noch nicht abschließend geklärt. Vermutlich ist der entscheidende Effekt der, dass eine sich an der Lochtrommel anhaftend auf den Abstreifer zudrehende, leere Schlauchbeutelverpackung bei erfindungsgemäßer Positionierung die Tendenz hat den Abstreifer bzw. den Kontaktabschnitt des Abstreifers ein (kleines) Stück weit in Umfangsrichtung mitzunehmen und dadurch in Umfangsrichtung enger an den Mantel der Lochtrommel anzudrücken - unbeschadet der Tatsache, dass es der Schlauchbeutelverpackung in vielen Fällen dann doch gelingt den Abstreifer entgegen seiner Zustellrichtung von der Lochtrommel abzuheben. Diese Art der Beeinflussung der Spaltgeometrie durch die abzustreifenden Schlaubeutelverpackungen selbst präsentiert sich als besonders effektiv. Auch wenn die leere Schlauchbeutelverpackung dadurch zunächst den Abstreifer zu passieren vermag, ohne sich schon von der Lochtrommel zu lösen, wird dadurch die wohl entscheidende Abstreifwirkung erreicht. In allen Fällen oder zumindest für die überwiegende Zahl der Fälle lässt sich bei Verwendung der erfindungsgemäßen Spalteinstellung folgendes beobachten: Die dem Abstreifer zugewandte Seite der Schlauchbeutelverpackung wird durch diesen gebremst während sich die noch an der Lochtrommel anhaftende Seite der Schlauchbeutelverpackung zunächst ungehindert schnell mit der Lochtrommel mittdreht. Dies führt zu internen Spannungen in der weitgehendleeren Schlauchbeutelverpackung, die diese schließlich von der Lochtrommel abziehen bzw. abspringen lassen. Auf diese Atz und Weise fällt eine leere Schlaubeutelverpackung in der überwiegenden Zahl der Fälle erst (in Drehrichtung der Lochtrommel gesehen) nach dem Abstreifer von der Lochtrommel ab und kann dort bequem entsorgt werden ohne dass Verstopfungsgefahr besteht.

### OPTIONALE VERFEINERUNGEN

Mit anderen Worten definiert ist es besonders bevorzugt, wenn die Zustell-Linie, genauer die gedachte Verlängerung der Zustell-Linie, entlang derer der Abstreifer oder der Kontaktabschnitt des Abstreifers gegen die Lochtrommel zugestellt wird, den Bereich durchquert, der unmittelbar zwischen der Drehachse der Lochtrommel und dem engsten Bereich zwischen der Lochtrommel und der Walze liegt.

Stellt man sich vor, dass der Bereich des kleinsten Spalts oder des maximalen Kontakts zwischen dem Mantel der Lochtrommel und dem Mantel der Walze auf drei Uhr liegt, dann ist der Abstreifer vorzugsweise in einer Position zwischen 17:45 und 15:30 Uhr angeordnet, idealerweise liegt er sogar in einer Position zwischen 17:00 Uhr und 17:30 Uhr.

Idealerweise schneidet die Zustell-Linie, genauer die gedachte Verlängerung der Zustell-Linie, die Linie zwischen der Drehachse der Lochtrommel und dem Bereich des kleinsten Spalts oder des maximalen Kontakts zwischen dem Mantel der Lochtrommel und dem Mantel der Walze orthogonal, zumindest im Wesentlichen. Letzteres ist jedenfalls bei einer Abweichung von +/- 5° der Fall, auch wenn eine solche Konfiguration nicht bevorzugt ist. Idealerweise ist es so, dass der Abstreifer einen Kontaktabschnitt aufweist, der die Lochtrommel berührt, solange der Abstreifer in Bereitschaftsposition ist.

Idealerweise liegt der Abstreifer bzw. der Kontaktabschnitt des Abstreifers unter Vorspannung, vorzugsweise unter Federvorspannung, gegen den Mantel der Lochtrommel an. Hierdurch werden die - auch durch die prinzipielle Möglichkeit, dass die leeren Schlauchbeutel den Abstreifer oder seinen Kontaktabschnitt von der Lochtrommel abheben, geprägten - Spaltverhältnisse positiv beeinflusst.

Vorzugsweise ist es so, dass der Kontaktabschnitt des Abstreifers eine sich verjüngende, idealerweise meißelförmige bzw. mit doppelter, gegenläufiger Keilfläche versehene Spitze ausbildet, mit der er gegen den Mantel der Lochtrommel anliegt. Ganz ideal ist es dabei, wenn zumindest auf der Seite, auf der die leeren Schlauchbeutelverpackungen zuerst eintreffen, die Keilschräge völlig oder im Wesentlichen der örtlichen Radiallinie entspricht, mehr als die Zustell-Linie, idealerweise zumindest +/- 7.5° besser zumindest +/- 5°.

Besonders günstig ist es, wenn Kontaktabschnitt des Abstreifers durch einen Balken mit einem Dreiecksquerschnitt ausgebildet wird, dessen Balkenlängsachse im Regelfall parallel zur Drehachse der Lochtrommel verläuft.

Typischerweise ist es so, dass der Abstreifer bzw. der Kontaktabschnitt des Abstreifers an mindestens zwei Führungsstiften translatorisch verschiebbar gehalten ist, die parallel zur Zustell-Linie verlaufen.

Besonders günstig ist es, wenn mindestens ein Führungsstift ein Federelement durchgreift.

Bei alledem ist die Federvorspannung, mit der Kontaktabschnitt des Abstreifers gegen den Mantel der Lochtrommel gespannt wird, wie folgt gewählt: Eine gegen den Kontaktabschnitt des Abstreifers anlaufende Schlauchbeutelverpackung kann den Kontaktabschnitt des Abstreifers von dem Mantel der Lochtrommel abheben und in den so gebildeten Spalt zwischen dem Kontaktabschnitt des Abstreifers und dem Mantel der Lochtrommeleindringen - derart, dass sie sich in Drehrichtung der Lochtrommel nach dem Abstreifer von der Lochtrommel ablöst bzw. abfällt.

Idealerweise trägt die Walze an ihrem Umfangsmantel eine weichelastische Beschichtung vorzugsweise aus einem Weichelastomer oder Gummi. Das erlaubt es die Walze im Betrieb so fest an die Lochtrommel anzudrücken, dass sie unter pneuartiger, also jedenfalls mehr als nur unwesentlicher, reversibel-elastischer Abplattung auf der Lochtrommel abwälzt und gleichzeitig noch so weit weiter komprimiert werden kann, wie das erforderlich ist, um eine weitgehend entleerte Schlauchbeutelverpackung durch die Kontaktzone hindurch auf die andere Seite des Paares aus Lochtrommel und Walze zu transportieren.

Besonders günstig ist es die Walze ausschließlich dadurch angetrieben wird, dass sie unter Reibschluss auf dem Mantel der Lochtrommel abrollt. Warum dies für das Abstreifen der ganz oder teilweise entleerten Schlauchbeutel besonders günstig ist, ist noch nicht abschließend geklärt. Es hat sich gezeigt, dass die ganz oder großteils entleerten Schlauchbeutel bei dieser Art des (anders als bei Verwendung eines Zahnradgetriebes) nichtzwangsgesteuerten Antriebs dazu neigen weniger fest an der Lochtrommel anzuhaften.

### FIGURENLISTE

Fig. 1 zeigt ein Gerät zum Rückgewinnen von Füllgut in der Seitenansicht.
Fig. 2 zeigt ein Gerät zum Rückgewinnen von Füllgut in der Schnittansicht bei vertikaler Schnittebene senkrecht zu den Längsachsen der Lochtrommel und der Walze.
Fig. 3 zeigt ein Gerät zum Rückgewinnen von Füllgut in der Schnittansicht bei horizontaler Schnittebene parallel zu den Längsachsen der Lochtrommel und der Walze.
Fig. 4 zeigt den Abstreifer in schematischer Darstellung

### AUSFÜHRUNGSBEISPIEL

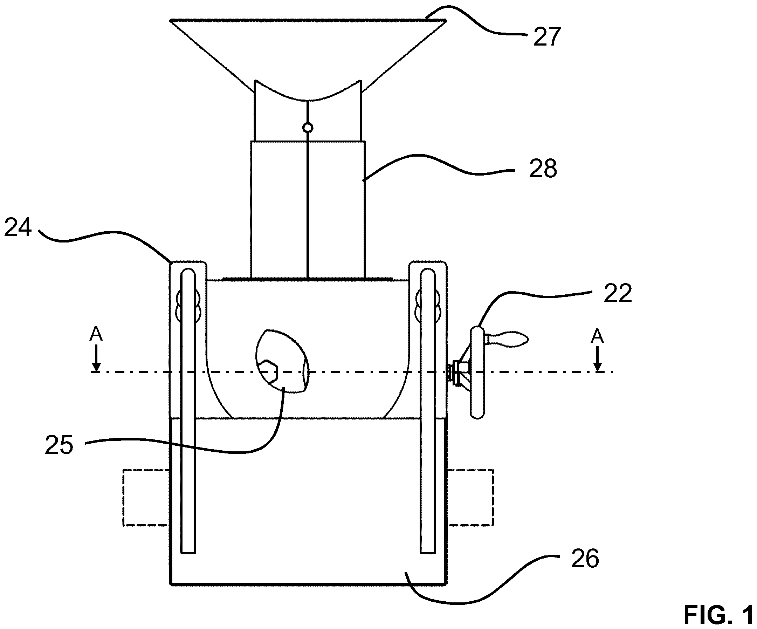

Die Funktionsweise der erfindungsgemäßen Vorrichtung wird beispielhaft anhand der Fig. 1 bis Fig. 4 beschrieben. Das in diesem Beispiel beschriebene Gerät wird in erster Linie für die Rückgewinnung von Brät aus fehlerhaft verschlossenen Wursthäuten / Därmen verwendet. Es ist jedoch auch für die Rückgewinnung anderer - insbesondere pastöser oder fließfähiger - Güter aus fehlerhaft verschlossenen Schlauchbeutel-Verpackungen geeignet, worauf im Nachfolgenden nicht jeweils erneut eingegangen wird. Die Schlauchbeutel-Verpackungen bzw. Wursthäute müssen auch nichtzwingend fehlerhaft verpackt sein, es kann sich vielmehr auch um eine Entleerung zum bestimmungsgemäßen Verbrauch des Inhalts handeln.

In Fig. 1 wird das Gerät zur Rückgewinnung des Bräts in der Seitenansicht gezeigt. Die Würste werden dafür in den Befülltrichter 27 gelegt oder geführt, von wo aus sie über das zweiteilige Zuführrohr 28 in das Innere des Geräts gleiten oder fallen.

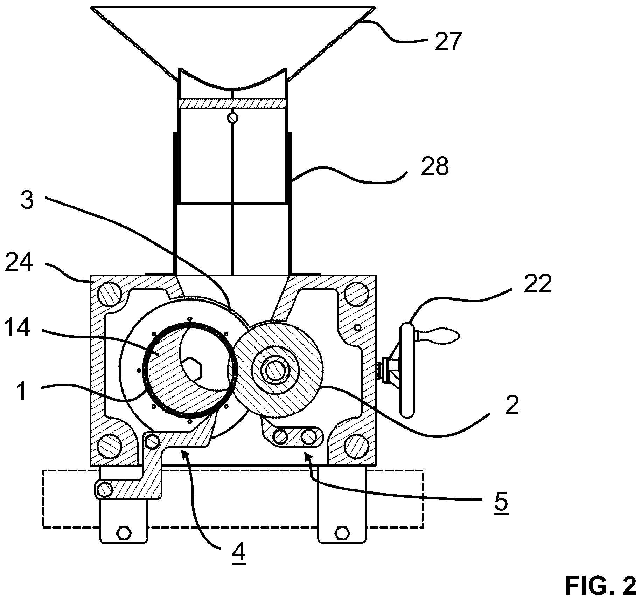

Da das Zuführrohr 28 mündet oberhalb des Spalts 3 zwischen einer rotierenden Walze 2 und einer rotierenden Lochtrommel 1 im Inneren des Geräts, wie Fig. 2 zu entnehmen ist. Die Walze 2 kann bei diesem Ausführungsbeispiel mit einer Oberflächenhaut aus Silikon oder einen anderen Weichelastomer ausgerüstet sein, sodass sie sich beim Kontakt mit der Lochtrommel 1 pneuartig deformiert, in manchen Fällen bis hin zu mehr als 1mm oder zumindest mehr als 0,5 mm in radialer Richtung, vgl. hierzu auch die Fig. 2.

Liegt nun eine Wurst am Spalt 3 zwischen der Lochtrommel 1 und der Walze 2 an, wird diese aufgrund der Rotation der Lochtrommel 1 und der Walze 2 in den Spalt hineinbefördert. Aufgrund der starken Komprimierung der Wurst im Spalt 3 zwischen der Lochtrommel 1 und der Walze 2 kommt es zum Aufplatzen der Wursthaut. Das somit freigelegte Brät - also der Inhalt der Wurst - wird nun von der Walze 2 durch die Löcher der Lochtrommel 1 in deren Inneres gedrückt. Dort fällt das Brät in das einen Kanal bildende Führungselement 14, von wo aus es in Richtung eines Auffangbehälters 26 transportiert wird.

Da die aus dem Spalt 3 zwischen der Walze 2 und der Lochtrommel 1 austretenden, leeren Wursthäute häufig an der Lochtrommel 1 oder der Walze 2 haften bleiben, ist bevorzugt sowohl die Lochtrommel 1 als auch die Walze 2 mit je einem Abstreifer 4 , 5 ausgestattet, an denen die Walze 2 und die Lochtrommel 1 jeweils mit ihrem Außendurchmesser entlanggleiten. Die an der Lochtrommel 1 oder der Walze 2 haftenden Wursthäute werden an den Abstreifern 4, 5 von der Lochtrommel 1 bzw. der Walze 2 gelöst.

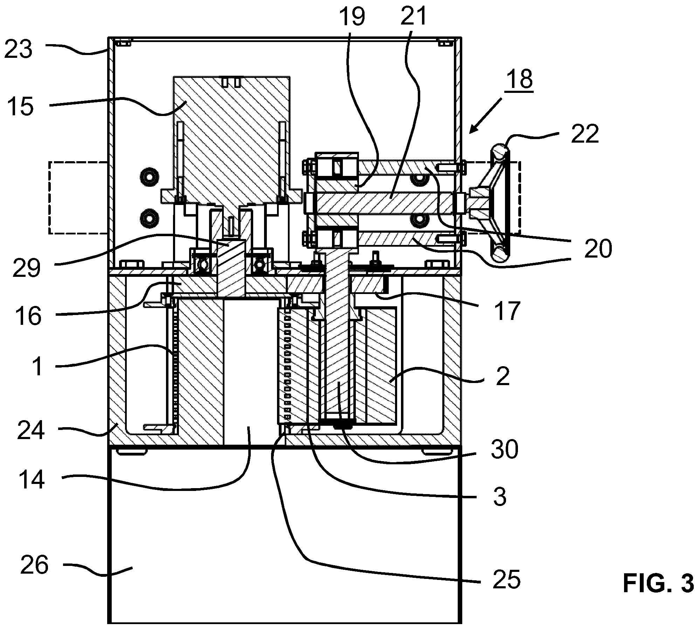

In Fig. 3 wird die Schnittansicht des Schnitts A aus Fig. 1 dargestellt.

Hier ist zu erkennen, dass der Abstand der Walze 2 von der Lochtrommel 1 mit Hilfe des Schraubgetriebes 18 verändert werden kann. Dafür wird über die Kurbel 22 die Gewindestange 21 in Rotation versetzt, wodurch die über die Spindelmutter 19 mit der Gewindestange 21 gekoppelte Welle 30 der Walze 2 parallel zur Welle 29 der Lochtrommel 1 bewegt wird. Die Veränderung der Position der Walze 2 ist sinnvoll, um die Höhe des Spalts 3 bzw. die Spaltpressung zwischen der Lochtrommel 1 und der Walze 2 an die Dicke der zu entleerenden Würste anzupassen. Somit kann sichergestellt werden, dass keine unzulässig hohen Kräfte auf die Walze 2 und die Lochtrommel 1, sowie deren Führungs- und Lagerungselemente ausgeübt werden.

Die Lochtrommel 1 wird über ihre Welle 29 vom Motor 15 angetrieben. Da hier auf der Welle 29 der Lochtrommel 1 ein Stirnrad 16 angebracht ist, welches mit einem auf der Welle 30 der Walze 2 angebrachten zweiten Stirnrad 17 im Eingriff steht, wird die Walze 2 ebenfalls über den Motor 15 angetrieben. Eine solche Zwangskoppelung per Getriebe oder Riemen kann vorgesehen sein, ist aber nicht bevorzugt. Stattdessen haben Untersuchungen ergeben, dass es in den meisten Fällen besser ist die Walze allein dadurch rotatorisch anzutreiben, dass sie unter Friktion auf der Lochtrommel abrollt. Das in das Führungselement 14 im Inneren der Lochtrommel 1 fallende Brät wird in Richtung des Auffangbehälters 26 transportiert. Dafür mündet das Führungselement 14 in die Austrittsöffnung 25 im Gehäuse 24.

Zwischen das Gehäuse 24 und das Gehäuse 23 kann je nach Anforderung an die Reinheit des Bräts ein O-Ring oder eine Flüssigdichtung (flüssig zu applizierende Dichtung) eingebracht werden, um Verschmutzungen, wie beispielsweise den Abrieb am Schraubgetriebe 18 oder Schmierflüssigkeiten vom Brät fernzuhalten.

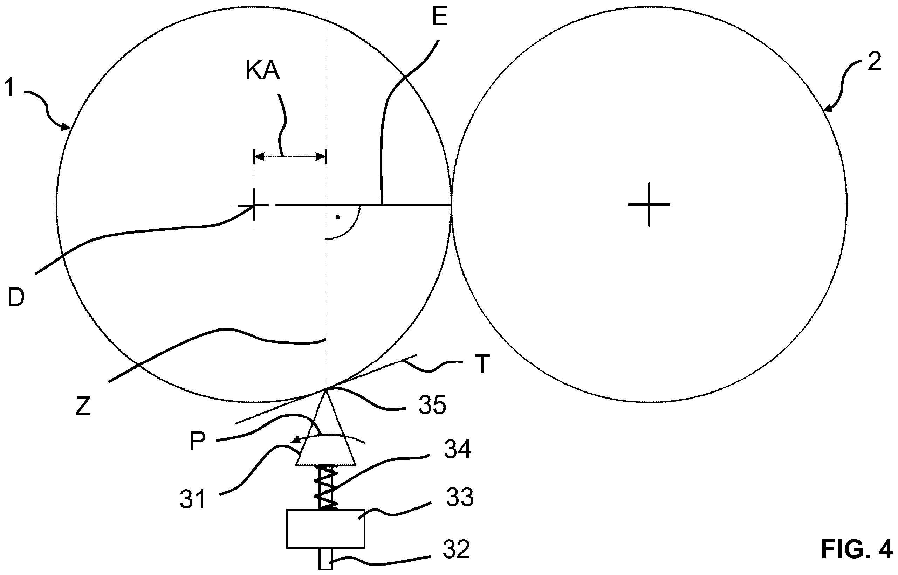

Der von Fig. 4 gezeigte Abstreifer 4, der für ein Abstreifen der Lochtrommel sorgt, ist erfindungsgemäß. Diese Schemazeichnung zeigt die Lochtrommel 1 und die Walze 2.

Gut zu erkennen ist das Abstreiforgan bzw. der Kontaktabschnitt 31 des Abstreifers 4. Der Kontaktabschnitt besitzt hier die zwar nicht obligatorische, aber klar bevorzugte, meißelartige Form mit zwei aufeinander zu geneigten Keilschrägen, die sich am äußersten Ende schneiden und dann dort einen First 35 bilden, der unmittelbar gegen den Mantel der Lochtrommel anliegt. Gut zu erkennen ist, dass die Keilschräge auf der (im Bild rechten) Seite, auf der die leeren Schlauchbeutelverpackungen zuerst eintreffen, im Wesentlichen der örtlichen Radiallinie entspricht. Jedenfalls schließt diese Keilfläche einen kleineren Winkel mit der örtlichen Radiallinie ein, als die Zustell-Linie Z.

Bemerkenswert ist, dass eine Wursthaut, die (im Bild von rechts her kommend) z. B. auf die seitliche Keilfläche des Kontaktabschnitts 31 auftrifft, die Tendenz hat dem Kontaktabschnitt 31 unter Ausnutzung des Lagerspiels (soweit vorhanden) und der Elastizität der Lagerung in Richtung des Pfeils P wegzudrücken und dadurch den Kontaktabschnitt tendenziell in Richtung des Pfeils P dichter an den Trommelmantel heranbringt. Hierdurch ergibt sich spezielle Spaltgeometrie, die sich für die Erfindung so vorteilhaft erwiesen hat.

Unbeschadet dessen ist der Kontaktabschnitt entlang der Zustell-Linie Z jederzeit translatorisch beweglich, kann also von einer Wursthaut auch auswärts (in der Zeichnung nach unten) verschoben werden. Der Kontaktabschnitt 31 ist zu diesem Zweck an mindestens einem Paar Führungsbolzen 32 translatorisch beweglich geführt. Die Führungsbolzen 32 liegen auf der gedachten Zustell-Line Z. Die Führungsbolzen 32 sind hier in der Abstreiferbasis 33 verankert. Wie man sieht kann mindestens ein Federelement 34 vorgesehen sein, das das Abstreiforgan bzw. den Kontaktabschnitt 31 des Abstreifers 4 gegen den Mantel der Lochtrommel 1 vorspannt. Idealerweise durchgreifen mindestens zwei Führungsbolzendurch je ein Federelement 34, das idealerweise die hier gezeigte Gestalt einer Schraubenfeder besitzt.

Gut zu erkennen ist, dass die gedachte Zustell-Linie Z entlang derer das Abstreiforgan bzw. der Kontaktabschnitt 31 des Abstreifers 4 gegen die Lochtrommel zugestellt wird, nicht durch die Drehachse D der Lochtrommel 1 geht bzw. diese schneidet. Stattdessen läuft sie an der Drehachse D vorzugsweise mit einem kleinsten Abstand KA vorbei, der größer als 1/3 des Außendurchmessers der Lochtrommel 1 ist.

Wie man sieht erfolgt die Zustellung des Abstreiforgans oder des Kontaktabschnitts des Abstreiforgans also nicht in rein radialer Richtung. Stattdessen erfolgt sie asymmetrisch bzw. schräg zu der Tangente T oder Tangentenschar an die Kontaktzone, d. h. der Zone, in der das Abstreiforgan oder der Kontaktabschnitt des Abstreifers gegen den Mantel der Lochtrommel zur Anlage kommt.

Wie man sieht durchquert die gedachte Verlängerung der Zustell-Linie, entlang derer der Abstreifer oder der Kontaktabschnitt 31 des Abstreifers 4 gegen die Lochtrommel 1 zugestellt wird, den Bereich der unmittelbar zwischen der Drehachse D der Lochtrommel und dem engsten Bereich zwischen der Lochtrommel und der Walze liegt.

Was hier nicht näher figürlich dargestellt ist ist, dass der Kontaktabschnitt 31 des Abstreifers 4 auch mehrteilig ausgeführt sein kann. Z. B. kann die zum unmittelbaren Kontakt mit der Lochtrommel vorgesehene Leiste ein Verschleißteil sein, das mit einem Schwalbenschwanz oder einem kederartigen Fortsatz in eine komplementäre Nut des restlichen Kontaktabschnitts 31 eingeschoben sein kann. Wie auch immer, der Kontaktabschnitt 31 bzw. seine Leiste ist im Regelfall aus einem im wesentlichen nichtelastischen Material gefertigt, das sich unter den üblichen Betriebskräften allenfalls um Bruchteile eines mm verformen kann, ganz anders, als ein Gummi oder Weichelastomer.

Ebenfalls nicht figürlich dargestellt, aber ausgesprochen praktisch ist, dass der Abstreifer als ganzer schwenkbar gelagert sein kann, etwa derart, dass er in Fig. 4 um mehr als 45° in Richtung hin zur Walze geschwenkt werden kann um auf diese Art und Weise die Lochtrommel, etwa zu

Reinigungszwecken, bequem ausbauen und abnehmen zu können, ohne eine Teilzerlegung des Abstreifers 4 vornehmen zu müssen. Nicht bevorzugt, aber möglich ist es den Abstreifer 4 - anstatt ihn mit einer Stangenlagerung zu versehen - als federodergewichtsvorgespannte Wippe zu konzipieren mit der er auf den letzten mm quasi-translatorisch in der erfindungsgemäßen Art und Weise gegen die Lochtrommel 1 zugestellt werden kann, entlang einer dann nur im Wesentlichen geraden Zustell-Linie z.

### SONSTIGES

Es weiterer wesentlicher Aspekt des beanspruchten Geräts ist, dass das Gerät so gestaltet wird, dass es zu Reinigungszwecken werkzeuglos demontierbar ist.

Es fügt sich auf diese Art und Weise nahtlos in die Fertigungshandhabungen ein. Sobald der Anlagenführer sieht, dass z. B. eine Kette von Würsten nur unzulänglich verschlossen worden ist, kann er sie aus der Fülllinie entnehmen und ohne die Fülllinie verlassen, bzw. eventuell sogar ohne entlang der Fülllinie hin und her laufen zu müssen einem Auspressen zuführen, mit dem Ziel den Wurstinhalt zurückzugewinnen.

### BEZUGSZEICHENLISTE

- 1: Lochtrommel
- 2: Walze
- 3: Spalt zwischen Walze und Lochtrommel
- 4: Abstreifer an Lochtrommel
- 5: Abstreifer an Walze
- 6: Abstreiferlippe
- 7: Abstreiferlippe mit Zackenprofil
- 8: Abstreiferlippe mit Reifenprofil
- 9: Grundkörper des Abstreifers
- 10: Nut für Abstreiferlippe
- 11: Durchbrüche in Abstreifer
- 12: Durchgangsbohrung für Abstreiferwelle
- 13: nicht vergeben
- 14: Führungselement in Lochtrommel
- 15: Motor
- 16: Stirnrad an Lochtrommel
- 17: Stirnrad an Walze
- 18: Schraubgetriebe
- 19: Spindelmutter
- 20: Stützstangen
- 21: Gewindestange
- 22: Kurbel
- 23: Gehäuse Teil 1
- 24: Gehäuse Teil 2
- 25: Austrittsöffnung im Gehäuse
- 26: Auffangbehälter
- 27: Befülltrichter
- 28: Zuführrohr
- 29: Welle der Lochtrommel
- 30: Welle der Walze
- 31: Kontaktabschnitt des Abstreifers bzw. Abstreiforgan
- 32: Führungsbolzen
- 33: Abstreiferbasis
- 34: Federelement
- Z: Zustell-Linie
- D: Drehachse der Lochtrommel
- KA: kleinster Abstand zwischen der Zustell-linie Z und der Drehachse D der Lochtrommel
- T: Tangente der Kontaktzone
- E: engster Bereich zwischen Lochtrommel und Walze
- P: tendenzielles Verschwenken des Kontaktabschnitts durch einteffende Wursthäute

## Patentansprüche

1. Gerät zum Rückgewinnen von Füllgut aus Schlauchbeutel-Verpackungen, mit einer rotierenden Lochtrommel (1) und einer rotierenden Walze (2), die so miteinander in Wirkverbindung stehen, dass gefüllte Schlauchbeutel-Verpackungen, die in den Spalt (3) zwischen der Walze (2) und der Lochtrommel (1) geführt werden, aufgebrochen werden und der Inhalt der Schlauchbeutel-Verpackungen von der Walze (2) durch die Löcher der Lochtrommel (1) gedrückt wird, wobei dem Außenumfang der Lochtrommel (1) an einer Position, die in Arbeitsdrehrichtung gesehen hinter dem Spalt (3) liegt, ein Abstreifer (4) mit einem Abstreiforgan zur Entfernung der ausgepressten Schlauchbeutel von der Lochtrommel (1) zugeordnet ist, **dadurch gekennzeichnet, dass** das Abstreiforgan in Richtung entlang einer Zustell-Linie (Z) gegen den Mantel der Lochtrommel (1) zugestellt wird, die die Drehachse (D) der Lochtrommel (1) nicht schneidet, und dass das Abstreiforgan in Richtung entlang einer Zustell-Linie (Z) gegen den Mantel der Lochtrommel (1) derart zugestellt ist, dass die dem Abstreifer (4) zugewandte Seite der Schlauchbeutel-Verpackung gebremst wird während die sich noch an der Lochtrommel (1) anhaftende Seite der Schlauchbeutel-Verpackung zunächst ungehindert schnell mit der Lochtrommel (1) weiter mittdreht, wodurch die Schlauchbeutel-Verpackung nach dem Abstreifer (4) von der Lochtrommel (1) abfällt.

2. Gerät nach Anspruch 1, **dadurch gekennzeichnet, dass** die Zustell-Linie (Z) den Bereich durchquert der unmittelbar zwischen der Drehachse (D) der Lochtrommel (1) und dem engsten Bereich zwischen der Lochtrommel (1) und der Walze (2) liegt.

3. Gerät nach Anspruch 2, **dadurch gekennzeichnet, dass** die der Zustell-Linie (Z) die Linie zwischen der Drehachse (D) der Lochtrommel (1) und dem engsten Bereich zwischen der Lochtrommel (1) und der Walze (2) orthogonal schneidet.

4. Gerät nach einem der vorhergehenden Ansprüche, **dadurch gekennzeichnet, dass** der Abstreifer (4) einen Kontaktabschnitt (31) aufweist, der die Lochtrommel (1) berührt solange der Abstreifer (4) in Bereitschaftsposition ist.

5. Gerät nach einem der vorhergehenden Ansprüche, **dadurch gekennzeichnet, dass** der Abstreifer (4) bzw. der Kontaktabschnitt (31) des Abstreifers (4) unter Vorspannung, vorzugsweise unter Federvorspannung, gegen den Mantel der Lochtrommel (1) anliegt.

6. Gerät nach einem der vorhergehenden Ansprüche, **dadurch gekennzeichnet, dass** der Kontaktabschnitt (31) des Abstreifers (4) eine sich verjüngende Spitze ausbildet, mit der er gegen den Mantel der Lochtrommel (1) anliegt.

7. Gerät nach einem der vorstehenden Ansprüche, **dadurch gekennzeichnet, dass** der Kontaktabschnitt (31) des Abstreifers (4) durch einen Balken mit einem Dreiecksquerschnitt ausgebildet wird, dessen Balkenlängsachse im Regelfall parallel zur Drehachse (D) der Lochtrommel (1) verläuft.

8. Gerät nach einem der vorstehenden Ansprüche, **dadurch gekennzeichnet, dass** der Abstreifer (4) bzw. der Kontaktabschnitt (31) des Abstreifers (4) an mindestens zwei Führungsstiften verschiebbar gehalten ist, die parallel zur Zustell-Linie (Z) verlaufen.

9. Gerät nach einem der vorstehenden Ansprüche, **dadurch gekennzeichnet, dass** mindestens ein Führungsstift ein Federelement (34) durchgreift.

10. Gerät nach einem der vorhergehenden Ansprüche, **dadurch gekennzeichnet, dass** die Federvorspannung mit der Kontaktabschnitt (31) des Abstreifers (4) gegen den Mantel der Lochtrommel (1) gespannt wird so gewählt ist, dass eine gegen den Kontaktabschnitt (31) des Abstreifers (4) anlaufende Schlauchbeutelverpackung den Kontaktabschnitt (31) des Abstreifers (4) von dem Mantel der Lochtrommel (1) abheben und in den so gebildeten Spalt zwischen dem Kontaktabschnitt (31) des Abstreifers (4) und dem Mantel der Lochtrommel (1) eindringen kann und sich in Drehrichtung (D) der Lochtrommel (1) nach dem Abstreifer (4) von der Lochtrommel (1) ablöset bzw. abfällt.

11. Gerät nach einen der vorhergehenden Ansprüche, **dadurch gekennzeichnet dass** die Walze (2) an ihrem Umfangsmantel eine weichelastische Beschichtung vorzugsweise aus einem Weichelastomer oder Gummi trägt.

12. Gerät nach einem der vorhergehenden Ansprüche, **dadurch gekennzeichnet, dass** die Walze (2) ausschließlich dadurch angetrieben wird dass sie unter Reibschluss auf dem Mantel der Lochtrommel (1) abrollt.

13. Gerät zum Rückgewinnen von Füllgut aus Schlauchbeutel-Verpackungen nach einem der vorergehenden Ansprüche, **dadurch gekennzeichnet, dass** der Abstand zwischen der Lochtrommel (1) und der Walze (2) variiert werden kann.

14. Gerät zum Rückgewinnen von Füllgut aus Schlauchbeutel-Verpackungen nach Anspruch 13, **dadurch gekennzeichnet, dass** der Abstand der Längsachse der Walze (2) zur Längsachse der Lochtrommel (1) über einen Schraubgetriebe, das von außerhalb des Geräts mit Hilfe einer Kurbel (22) aktiviert wird, geändert werden kann.

## Claims

1. A device for recovering filling contents from tubular sachet-packaging bags, comprising a rotating perforated drum (1) and a rotating roller (2) that are in functional connection with each other such that filled tubular sachet-packaging bags, which are guided into the gap (3) between the roller (2) and the perforated drum (1), are ruptured and the filling contents of the tubular sachet-packaging bags are pushed out by the roller (2) through the holes of the perforated drum (1), where a scraper (4) with a scraping element for removing the pressed tubular sachet bags from the perforated drum (1) is assigned to the outer circumference of the perforated drum (1) at a position that is behind the gap (3) in the direction of rotation, **characterized in that** the scraping element is delivered in direction along a delivery line (Z) against the cylindrical surface of the perforated drum (1), which does not intersect the axis of rotation (D) of the perforated drum (1), and that the scraping element is delivered in direction of a delivery line (Z) against the cylindrical surface of the perforated drum (1) in such a way that the side of the tubular sachet-packaging bag facing the scraper (4) is slowed down, while the side of the tubular sachet-packaging bag that still adheres to the perforated drum (1) initially continues to rotate quickly without hindrance with the perforated drum (1), causing the tubular sachet-packaging bag to fall off from the perforated drum (1) after the scraper (4).

2. Device according to claim 1, **characterized in that** the delivery line (Z) crosses the area that is directly between the axis of rotation (D) of the perforated drum (1) and the narrowest area between the perforated drum (1) and the roller (2).

3. Device according to claim 2, **characterized in that** the delivery line (Z) intersects the line between the axis of rotation (D) of the perforated drum (1) and the narrowest area between the perforated drum (1) and the roller (2) orthogonally.

4. Device according to any of the preceding claims, **characterized in that** the scraper (4) has a contact section (31) which touches the perforated drum (1) while the scraper (4) is in a standby position.

5. Device according to any of the preceding claims, **characterized in that** the scraper (4) or the contact section (31) of the scraper (4) rests on the surface of the perforated drum (1) under preload, preferably spring tension.

6. Device according to any of the preceding claims, **characterized in that** the contact section (31) of the scraper (4) forms a tapering tip with which it rests on the surface of the perforated drum (1).

7. Device according to any of the preceding claims, **characterized in that** the contact section (31) of the scraper (4) is formed by a bar with a triangular cross-section, whose longitudinal axis typically runs parallel to the axis of rotation (D) of the perforated drum (1).

8. Device according to any of the preceding claims, **characterized in that** the scraper (4) or the contact section (31) of the scraper (4) is held in a shiftable manner by at least two guide pins running parallel to the delivery line (Z).

9. Device according to any of the preceding claims, **characterized in that** at least one guide pin passes through a spring element (34).

10. Device according to any of the preceding claims, **characterized in that** the spring tension with which the contact section (31) of the scraper (4) is pressed against the cylindrical surface of the perforated drum (1) is chosen such that a tubular sachet-packaging bag coming into contact with the contact section (31) of the scraper (4) will lift the contact section (31) of the scraper (4) away from the cylindrical surface of the perforated drum (1), allowing the tubular sachet-packaging bag to enter the gap formed between the contact section (31) of the scraper (4) and the surface of the perforated drum (1), thus separating from the perforated drum (1) and falling off after the scraper (4).

11. Device according to any of the preceding claims, **characterized in that** the roller (2) carries a soft-elastic coating, preferably made of a soft elastomer or rubber, on its circumfering cylindrical surface.

12. Device according to any of the preceding claims, **characterized in that** the roller (2) is driven solely by rolling under friction contact with the cylindrical surface of the perforated drum (1).

13. Device for recovering filling contents from tubular sachet-packaging bags according to any of the preceding claims, **characterized in that** the distance between the perforated drum (1) and the roller (2) can be varied.

14. Device for recovering filling contents from tubular sachet-packaging bags according to claim 13, **characterized in that** the distance between the longitudinal axis of the roller (2) and the longitudinal axis of the perforated drum (1) can be adjusted via a screw mechanism, which is activated from outside the device using a crank (22).

## Revendications

1. Appareil pour la récupération de contenu à partir d'emballages de sac tubulaire, comprenant un tambour perforé rotatif (1) et un rouleau rotatif (2), qui sont en connexion fonctionnelle de sorte que les emballages de sac tubulaire remplis, qui sont guidés dans l'écart (3) entre le rouleau (2) et le tambour perforé (1), sont déchirés et que le contenu des emballages de sac tubulaire est poussé par le rouleau (2) à travers les trous du tambour perforé (1), un grattoir (4) avec un élément de grattage pour retirer les sacs tubulaires pressés du tambour perforé (1) étant attribué à la circonférence extérieure du tambour perforé (1) à une position située derrière l'écart (3) dans le sens de rotation, **caractérisé en ce que** l'élément de grattage est apporté dans la direction le long d'une ligne de livraison (Z) contre la surface cylindrique du tambour perforé (1), qui ne coupe pas l'axe de rotation (D) du tambour perforé (1), et que l'élément de grattage est positionné dans la direction le long d'une ligne de livraison (Z) de manière à ce que le côté d'emballage de sac tubulaire faisant face au grattoir (4) soit ralenti, tandis que le côté d'emballage de sac tubulaire qui reste encore adhéré au tambour perforé (1) continue à tourner rapidement sans entrave avec le tambour perforé (1), ce qui fait que l'emballage de sac tubulaire se détache du tambour perforé (1) après le grattoir (4).

2. Appareil selon la revendication 1, **caractérisé en ce que** la ligne de livraison (Z) traverse la zone qui se trouve directement entre l'axe de rotation (D) du tambour perforé (1) et la zone la plus étroite entre le tambour perforé (1) et le rouleau (2).

3. Appareil selon la revendication 2, **caractérisé en ce que** la ligne de livraison (Z) coupe orthogonalement la ligne entre l'axe de rotation (D) du tambour perforé (1) et la zone la plus étroite entre le tambour perforé (1) et le rouleau (2).

4. Appareil selon l'une des revendications précédentes, **caractérisé en ce que** le grattoir (4) possède une section de contact (31) qui touche le tambour perforé (1) tant que le grattoir (4) est en position de repos.

5. Appareil selon l'une des revendications précédentes, **caractérisé en ce que** le grattoir (4) ou la section de contact (31) du grattoir (4) est pressé contre la surface cylindrique du tambour perforé (1) sous tension, de préférence sous tension printanière.

6. Appareil selon l'une des revendications précédentes, **caractérisé en ce que** la section de contact (31) du grattoir (4) forme une pointe effilée avec laquelle il touche la surface cylindrique du tambour perforé (1).

7. Appareil selon l'une des revendications précédentes, **caractérisé en ce que** la section de contact (31) du grattoir (4) est formée par une barre avec une section transversale triangulaire, dont l'axe longitudinal de la barre est généralement parallèle à l'axe de rotation (D) du tambour perforé (1).

8. Appareil selon l'une des revendications précédentes, **caractérisé en ce que** le grattoir (4) ou la section de contact (31) du grattoir (4) est maintenu de manière déplaçable par au moins deux épingles de guidage parallèles à la ligne de livraison (Z).

9. Appareil selon l'une des revendications précédentes, **caractérisé en ce qu'**au moins une épingle de guidage traverse un élément de ressort (34).

10. Appareil selon l'une des revendications précédentes, **caractérisé en ce que** la tension du ressort avec laquelle la section de contact (31) du grattoir (4) est pressée contre la surface cylindrique du tambour perforé (1) est choisie de manière à ce qu'un emballage de sac tubulaire entrant en contact avec la section de contact (31) du grattoir (4) soulève la section de contact (31) du grattoir (4) de la surface cylindrique du tambour perforé (1), permettant au emballage de sac tubulaire d'entrer dans l'écart formé entre la section de contact (31) du grattoir (4) et la surface cylindrique du tambour perforé (1), puis se détacher du tambour perforé (1) et tomber après le grattoir (4).

11. Appareil selon l'une des revendications précédentes, **caractérisé en ce que** le rouleau (2) porte un revêtement élastomère souple, de préférence en élastomère souple ou en caoutchouc, sur sa surface cylindrique circonférenciel.

12. Appareil selon l'une des revendications précédentes, **caractérisé en ce que** le rouleau (2) est entraîné uniquement par roulement sous contact de friction avec la surface cylindrique du tambour perforé (1).

13. Appareil pour la récupération de contenu à partir d'emballages de sac tubulaire selon l'une des revendications précédentes, **caractérisé en ce que** la distance entre le tambour perforé (1) et le rouleau (2) peut être variée.

14. Appareil pour la récupération de contenu à partir d'emballage de sac tubulaire selon la revendication 13, **caractérisé en ce que** la distance entre l'axe longitudinal du rouleau (2) et l'axe longitudinal du tambour perforé (1) peut être ajustée par un mécanisme à vis, qui est activé depuis l'extérieur de l'appareil à l'aide d'une manivelle (22).
